# EUROPEAN PATENT APPLICATION

(11) **EP 4 570 474 A1**
(43) Date of publication of application: **18.06.2025**
(21) Application number: 24215988.7
(22) Date of filing: 28.11.2024
(51) Int. Cl.: B29C 51/06, B29C 51/08, B29C 51/10, B29C 51/14, B29C 51/16, B31B 50/00, B65D 25/14, B31B 50/62, B31B 50/64, B31D 5/02, B29C 51/26, B65D 5/20, B65D 5/42, B31B 110/10, B31B 110/30, B31B 120/00, B31B 120/40

(54) **METHOD AND APPARATUS FOR MAKING A CONTAINER**

(30) Priority: 11.12.2023 IT 202300026328; 11.12.2023 IT 202300026337; 04.11.2024 IT 202400024708; 04.11.2024 IT 202400024714
(71) Applicant: G. Mondini SpA, 25033 Cologne (BS) (IT)
(72) Inventor: MONDINI, Paolo Carlo, 25033 Cologne (BS) (IT); PADERNI, Daniel, 25045 CASTEGNATO BS (IT); Francini, Giorgia, 20044 Arese (IT)
(74) Representative: Ponchiroli, Simone

(57) **Abstract**

A method for making a container comprising a thermoformable film (2) which adheres to an outer skeleton (3), where the method comprises: a heating step in which the thermoformable film (2) is heated; a thermoforming step in which the thermoformable film (2) is thermoformed on the inner surface (4); an inserting step in which a pressing element (15) is inserted in the compartment (12), pressing the thermoformable film (2) with it against the bottom wall (5) to make the thermoformable film (2) adhere to the bottom wall (5) or to improve its adherence. The apparatus comprises a thermoforming device (18) for thermoforming the thermoformable film (2) on the inner surface (4) of the outer skeleton (3) and a pressing device (19) which comprises a supporting element (23) and the pressing element (15).

## Description

This invention relates to a method and an apparatus for making a container. In particular, this invention can be applied if the container comprises an outer skeleton and a thermoformable film which adheres at least to an inner surface of the outer skeleton.

It should be emphasised that this invention was initially developed with reference to containers in which the outer skeleton has a bottom wall which has a perimetric edge, and a lateral wall which defines an upper opening, the bottom wall and lateral wall together defining a compartment, and wherein the outer skeleton has a ratio between the maximum width of the upper opening and the maximum height of the compartment which is less than or equal to 2:1 (hereinafter also indicated as deep containers) or wherein the maximum height is greater than or equal 60 mm. However, this invention may also be particularly advantageous for containers of different shapes and sizes.

In particular, the method according to this invention can be applied if making the container comprises thermoforming the thermoformable film on the inner surface of the outer skeleton.

In general, in the prior art methods in which the thermoformable film is thermoformed on the inner surface of the outer skeleton, the outer skeleton is inserted in a housing, the thermoformable film is positioned above the housing and the outer skeleton and the top of the housing is closed while keeping the thermoformable film above the outer skeleton. The thermoformable film is heated (either when the housing is closed and the thermoformable film is above the outer skeleton or before closing the housing) and the vacuum is created inside the housing in such a way as to shape the thermoformable film making it adhere to the inner surface of the outer skeleton.

In some of the prior art methods, the thermoforming is carried out together with the movement of a piston which facilitates the deformation of the thermoformable film at the start of the thermoforming step, as described in patent application US 4,325,905 A.

However, the Applicant has found that such prior art methods are not suitable for all types of containers.

For example, they are not suitable for making deep containers, in which in the outer skeleton either the ratio between the maximum width of the upper opening and the maximum height of the compartment is less than or equal to 2:1 (therefore if the maximum width of the upper opening does not exceed double the maximum height of the compartment, as for example in the case of yoghurt pots) or the maximum height is greater than or equal to 60 mm (in particular, if the lateral wall and the bottom wall of the outer skeleton have an angle of between 80° and 90° between them).

In particular, the Applicant has found that thermoforming of the thermoformable film on the inner surface of the outer skeleton is not satisfactory at the bottom wall and, sometimes, at the lower part of the lateral wall of the outer skeleton, where the thermoformable film is very thin (due to the stretching it undergoes during thermoforming). In fact, in many cases, at the deepest zone of the compartment, the thermoformable film is either completely detached from or does not fully adhere to the outer skeleton.

On the contrary, in contrast, in general that problem is not encountered in containers in which the outer skeleton is constituted of smooth paperboard and in which the ratio between the maximum width of the upper opening and the maximum height of the compartment is greater than 2:1 (consider for example trays for packaging cold cuts), in which the starting thickness being equal, the thermoformable film is less thin, at the bottom wall, than in the case described above.

It should also be emphasised that said problem is much more apparent the smaller the ratio is between the maximum width of the upper opening and the maximum height of the compartment (that is to say, the maximum width of the upper opening being equal, the greater the maximum height of the compartment is). In fact, it is important to remember that in the thermoforming processes to which this invention relates there is no use of glue between the outer skeleton and the thermoformable film and the adherence between the two materials is only guaranteed on the thermoformable film side which is suitably made of a material configured to become adhesive at the moment when it is heated (in general these are low melting point resins which when heated act like glue); if the thermoformable film is stretched too much the surface density of that material may be insufficient to guarantee adherence. The problems encountered by the Applicant are confirmed by the fact that at present there are no deep containers on the market which comprise an outer skeleton and a thermoformed film which adheres to the inner surface of the outer skeleton. On the contrary, there are both prior art deep containers which comprise an inner vessel constituted of a thermoformed plastic material, around which a paperboard reinforcing skeleton is applied, with the two materials not however constrained to each other except by means of mechanical clamping of the reinforcing skeleton on the inner vessel, and deep containers obtained by drawing multi-layered film which comprise at least one layer suitable for constituting the inner film and one layer suitable for constituting the outer skeleton. Although those prior art containers may seem similar to those which this invention aims to obtain, they are not, since the thicknesses of the plastic material which are involved in the two cases are completely different. In fact, making the inner vessel currently on the market requires the use of thicknesses which are in general relatively high, greater than 200 µm, whilst using thermoforming of a thermoformable film directly on the outer skeleton, similarly to what is now known for containers that are not deep, could allow containers to be obtained in which the thickness of the plastic material would be between 200 µm and 50 µm, preferably between 150 µm and 50 µm, and even more preferably between 100 µm and 50 µm.

Furthermore, the Applicant found that, irrespective of the shape and size, the prior art methods are not suitable even for making containers which comprise a thermoformable film which adheres to an outer skeleton, when the material which constitutes the outer skeleton and/or that which constitutes the thermoformable film have a limited capability for adhering to each other, such as, for example, in the case of containers in which the outer skeleton is constituted of a cellulose pulp-based material (obtained in any way, for example from sugar cane residues, from bamboo, from wood fibre, from plant waste, etc.) or paperboard/cardboard/solid board.

In fact, with containers of this type, the adherence which can be obtained with thermoforming is very weak and may be lost as a result of simple handling of the containers or exposing them to relatively high temperatures (as happens for example if the containers are coffee capsules which, during use, make contact with high temperature water).

In this context the technical purpose which forms the basis of this invention is to define a method and to make an apparatus for making a container of the type indicated above, which at least partly overcome the above-mentioned disadvantages.

In particular the technical purpose of this invention is to define a method and to make an apparatus for making a deep container which allow the thermoformable film to be made to adhere in the optimum way to the bottom wall of the outer skeleton.

A further technical purpose of this invention is to define a method and to make an apparatus for making a container which allow the thermoformable film to also be made to adhere in the optimum way to the lateral wall of the outer skeleton.

In particular the technical purpose of this invention is to define a method and to make an apparatus for making a container which allow the thermoformable film to be made to adhere in the optimum way to the entire inner surface of the container even if materials with a poor capability for adhering to each other are used.

In particular the technical purpose of this invention is to define a method and to make an apparatus for making a container which allow the thermoformable film to be made to adhere in the optimum way to the entire inner surface of the container even if the stretching of the thermoformable film during the thermoforming step is such that it leaves on the bottom and/or on the lateral walls of the container a thickness of the material which is too reduced which does not allow a guarantee of a good level of adherence thanks to the thermoforming action alone.

The technical purpose specified and the aims indicated are substantially achieved by a method and by an apparatus for making a container as described in the appended independent claims. Particular embodiments of this invention are defined in the corresponding dependent claims.

Further features and the advantages of this invention will be more apparent in the detailed description of several preferred, non-limiting embodiments, of a method and of an apparatus for making a container illustrated in the accompanying drawings, in which:
- Figure 1 is a schematic vertical section of a thermoforming device of a first embodiment of an apparatus according to this invention, with some parts removed and in an open position;
- Figure 2 is a schematic vertical section of the thermoforming device of Figure 1, in a closed position;
- Figure 3 is a schematic vertical section of a thermoforming device of a second embodiment of an apparatus according to this invention, with some parts removed and in an open position;
- Figures 4 and 5 are schematic vertical sections of the thermoforming device of Figure 3 in two successive working steps;
- Figure 6 is a schematic vertical section of a pressing device of an apparatus according to this invention, with some parts removed, with a pressing element in an operating position;
- Figure 7 is a schematic vertical section of a detail of a further embodiment of an apparatus according to this invention which comprises a pressing element equipped with movable portions, with the pressing element in a retracted configuration;
- Figure 8 shows the detail of Figure 9 with the pressing element in an expanded configuration.

In the detailed description which follows first there will be a description of the method for making a container, which is the subject matter of a first aspect of this invention, and then a description of the apparatus for making the container, which is the subject matter of a second aspect of this invention.

What is described below with reference, respectively, to the method and to the apparatus, shall be understood to also be applicable, respectively, with reference to the apparatus and with reference to the method, if technically compatible.

Hereinafter, with reference to the above-mentioned figures, the reference number 1 denotes in its entirety an apparatus according to this invention, whilst the reference number 2 denotes in its entirety a thermoformable film and the reference number 3 an outer skeleton.

This invention relates in general to a method, and an apparatus 1, for making a container 25 which comprises an outer skeleton 3 and a thermoformable film 2 which adheres at least to an inner surface 4 of the outer skeleton 3.

In some embodiments the outer skeleton 3 comprises a bottom wall 5 and a lateral wall 6. The bottom wall 5 is configured to receive a product and has a perimetric edge 7. The lateral wall 6 extends between a lower edge 8, connected to the perimetric edge 7, and an upper edge 9 which defines an upper opening 10.

The bottom wall 5 and the lateral wall 6 together define a compartment 12 which is intended to house the product.

In some cases, the lateral wall 6 of the outer skeleton 3 extends in an annular way without gaps around the bottom wall 5. In this case, depending on the embodiments, the lateral wall 6 may for example comprise a single curved surface (and therefore, for example, extends substantially like an inverted frustum of a cone or like a cylinder), or it may comprise a plurality of faces. The lateral wall 6 may also have one or more windows, for example made at the centre of the faces.

In other cases, in contrast, the lateral wall 6 of the outer skeleton 3 may have breaks, that is to say interruptions which affect the entire height of the lateral wall 6 and a predetermined length along the perimetric edge 7; for example, it may comprise a plurality of faces each of which is spaced apart from the other faces adjacent to it. In these cases preferably the perimetric flange 11 is present, and the various parts of the lateral wall 6 are connected to each other both by the bottom wall 5 and by the perimetric flange 11. Advantageously, in these cases, after thermoforming of the thermoformable film 2 on the inner surface 4 of the outer skeleton 3, the container 25 laterally comprises alternating zones which are defined jointly by the thermoformable film 2 and by the outer skeleton 3, and zones defined only by the thermoformable film 2.

In any case, whether the lateral wall 6 extends without gaps or whether the lateral wall 6 has breaks, advantageously the lateral wall 6 of the outer skeleton 3 as a whole has a flared shape widening from the lower edge 8 towards the upper edge 9.

In some embodiments, in contrast, the outer skeleton 3 comprises a concave or hemispherical wall which defines the inner surface 4 and which has the upper edge 9 which defines the upper opening 10 (that is to say, a single wall which extends both at the bottom and laterally and in which a bottom zone and a lateral zone are not clearly distinguishable). In this case too, there may be breaks present, and the compartment 12 advantageously has a flared shape which widens towards the upper edge 9.

In some embodiments, advantageously, a perimetric flange 11 is connected to the lateral wall 6 at the upper edge 9 and extends outwards starting from the upper edge 9.

As already indicated, this invention has a first advantageous application if the outer skeleton 3 has a ratio between a maximum width of the upper opening 10 and a maximum height of the compartment 12 which is less than or equal to 2:1 (where the height is measured between the bottom wall 5 and the upper opening 10) or in which the outer skeleton 3 has a maximum height which is greater than or equal to 60 mm, and preferably a maximum height which is greater than or equal to 80 mm. Preferably, the method can advantageously be applied if the outer skeleton 3 has a ratio between the maximum width of the upper opening 10 and the maximum height of the compartment 12 which is less than or equal to 1.5:1. Even more preferably, the method can be applied if the outer skeleton 3 has a ratio between the maximum width of the upper opening 10 and the maximum height of the compartment 12 which is less than or equal to 1:1. It should be emphasised that the expression "maximum width" of the upper opening 10 means the measurable maximum dimension of the upper opening 10. By way of example: if the upper opening 10 has a circular shape, the maximum width corresponds to the diameter; if the upper opening 10 has a rectangular shape, the maximum width corresponds to the diagonal; whilst if the upper opening 10 has an elliptical shape, the maximum width corresponds to the semi-major axis of the ellipse. Moreover, as already indicated, this invention has a second advantageous application if the outer skeleton 3 and the thermoformable film 2 are constituted of materials which have a limited capability for adhering to each other as a result of the thermoforming process.

However, in general, this invention is not limited by the shape of the outer skeleton 3, or by the type of the outer skeleton 3, which may be coloured, transparent, with text, etc., nor by the material of which it is constituted. With regard to that, similarly to most prior art containers of this type, the outer skeleton 3 may advantageously be constituted of a paper and cardboard industry article, that is to say, a cellulose material-based article (such as paper or paperboard), or it may be constituted of different materials, for example of a plastic material-based article or of a metal material-based article (such as aluminium). Outer skeletons constituted of an article based on multiple different materials (such as, for example, cellulose material and plastic material) are also possible. Moreover, the outer skeleton 3 may be constituted of one or more folded and/or shaped sheets of material, or of a single body (for example constituted of cellulose pulp).

This invention is also not limited by the type of thermoformable film 2 since it may be coloured, transparent, etc. Moreover, the thermoformable film 2 may be constituted of fossil-based plastics, bio-based plastics, natural plastics, biodegradable or compostable plastics, or mixtures thereof, or of a multi-layer material based on one or more of them.

Similarly to the prior art methods for making similar containers, the method according to this invention comprises a heating step, during which the thermoformable film 2 is heated, and a thermoforming step, during which the heated thermoformable film 2 is thermoformed on the inner surface 4 of the outer skeleton 3.

As is known, advantageously the thermoforming step is carried out by creating the vacuum inside a seat 13 into which the outer skeleton 3 was previously inserted, between the outer skeleton 3 and the thermoformable film 2. In particular, the method preferably comprises a loading step, during which the outer skeleton 3 is inserted in the seat 13, a positioning step, during which the thermoformable film 2 is positioned above the outer skeleton 3 placed in the seat 13, and a closing step, during which the top of the seat 13 is closed with a closing surface 14 (keeping the thermoformable film 2 interposed between the closing surface 14 and the outer skeleton 3).

It should be emphasised that this invention may be applied if the thermoformable film 2 is already in sheets, and advantageously there is thermoforming of the entire sheet without waste material, or if the thermoformable film 2 is fed from a reel and is subsequently cut into sheets.

Moreover, in some embodiments in the outer skeleton 3, at the bottom wall 5, there are holes present to allow the air to be sucked out of the seat 13, whilst in other embodiments the outer skeleton 3 does not have those holes and they must therefore be made.

During the thermoforming step, by creating the vacuum in the seat 13, the thermoformable film 2 is deformed and shaped on the inner surface 4 of the outer skeleton 3. Depending on the embodiments of this invention, at the end of the thermoforming step the (thermoformed) thermoformable film 2 may be in contact with the entire inner surface 4 of the outer skeleton 3, or may be at least partly spaced apart from the bottom wall 5 and, if necessary, from the lateral wall 6.

It should be emphasised that the aspects strictly linked to the thermoforming step, as well as to the other steps described above, are known to a person expert in the sector and for this reason will not be described in further detail below.

According to the main innovative aspect of this invention, the method also comprises an inserting step which is carried out after the thermoforming step. During the inserting step, a pressing element 15 is inserted inside the compartment 12 and the thermoformable film 2 is pressed, with the pressing element 15, against the inner surface 4 of the outer skeleton 3 either to make the thermoformable film 2 adhere to the bottom wall 5 of the outer skeleton 3 or to increase the adherence of the thermoformable film 2 to the inner surface 4 of the outer skeleton 3.

If at the end of the thermoforming step the thermoformable film 2 is at least partly spaced apart from the bottom wall 5, advantageously, the inserting step in turn comprises a first movement sub-step and a second movement sub-step. During the first movement sub-step, the pressing element 15 is moved towards the bottom of the outer skeleton 3 until it reaches a first contact position, in which the pressing element 15 makes contact with the thermoformable film 2. During the second movement sub-step, in contrast, the pressing element 15 is further moved (towards the bottom of the outer skeleton 3) from the first contact position, until it reaches a second contact position in which the pressing element 15 is in contact with the thermoformable film 2 and presses it against the inner surface 4. Preferably, but not necessarily, the first movement sub-step and the second movement sub-step are carried out one after another continuously, without any interruption between them.

Moreover, advantageously, the method comprises a removing step, carried out after the inserting step, and during which the pressing element 15 is removed from the compartment 12.

In some embodiments in which the bottom wall 5 and the lateral wall 6 are present, during the inserting step, the thermoformable film 2 is pressed, with the pressing element 15, against the bottom wall 5 and/or against at least one portion of the lateral wall 6, advantageously a lower portion 16 of the lateral wall 6. With regard to that, it should be emphasised that the expression "lower portion 16" means the portion of the lateral wall 6 which extends upwards starting from the lower edge 8. Pressing the thermoformable film 2 both against the bottom wall 5 and against the lower portion 16 of the lateral wall 6 is particularly advantageous if the thermoformable film 2, after thermoforming step, is detached from the bottom wall 5 and from the lower portion 16 of the lateral wall 6.

In some of these embodiments, during the inserting step, the thermoformable film 2 is pressed, with the pressing element 15, not just against the lower portion 16 of the lateral wall 6, but against the entire lateral wall 6.

In some embodiments, during the inserting step, the thermoformable film 2 is pressed, with the pressing element 15, against the entire inner surface 4.

In some embodiments, during the inserting step, a pressing element 15 is used which is substantially shaped to match at least one lower zone 17 of the compartment 12, at which it must press the thermoformable film 2 against the outer skeleton 3 (for example only the bottom wall 5 or the lower portion 16 of the lateral wall 6). It is also possible that, during the inserting step, a pressing element 15 is used which is substantially shaped to match the entire compartment 12, advantageously if the pressing element 15 must press the thermoformable film 2 against the entire inner surface 4.

In some embodiments, the inserting step is carried out inside the seat 13 used for the thermoforming step, after having opened the seat 13 and while keeping that seat 13 open. In this case, advantageously the method therefore comprises an opening step, which is carried out after the thermoforming step and before the inserting step, during which the seat 13 is opened.

In others of these embodiments, in contrast, the inserting step is carried out inside the seat 13 but while keeping the seat 13 closed. In this case too the method will comprise the opening step previously described for extracting the container 25, although this is carried out after the inserting step.

In many embodiments, during the inserting step the outer skeleton 3 is kept inside the seat 13 defined by a supporting body 20 and the pressing element 15 is used to press the thermoformable film 2 and the outer skeleton 3 against the supporting body 20.

Advantageously, during the inserting step a heated pressing element 15 and/or supporting body 20 is used and, respectively, the pressing element 15 and/or the supporting body 20 is kept at a temperature which is between 50°C and 250°C, preferably between 50°C and 200°C. Depending on the embodiments and the materials used, the temperature may be more preferably between 100°C and 200°C and even more preferably between 100°C and 150°C (for example for thermoformable films 2 constituted of fossil-based materials), or more preferably be between 60°C and 100°C (for example for thermoformable films 2 constituted of compostable materials).

In some embodiments, the inserting step comprises an expansion step in which the pressing element 15 expands inside the compartment 12, radially relative to a central axis of the compartment 12, to press the thermoformable film 2, with the pressing element 15, against the inner surface 4.

Preferably, some embodiments can advantageously be applied if the outer skeleton 3 comprises at least one pair panels which are superposed and between which a heat-activatable glue is present. In this case, during the inserting step the thermoformable film 2 is pressed, with the pressing element 15, against the pair of superposed panels and activation of the heat-activatable glue is caused; activation of the heat-activatable glue then causes adhesive coupling between the pair of panels. Advantageously, in these embodiments, during the inserting step the thermoformable film 2 is pressed, with the pressing element 15, against the inner surface 4 at least at the two superposed panels (for example: the pressing element 15 is used to press at the lower portion 16, if the superposed panels between which the heat-activatable glue is present are at the lower portion 16; the pressing element 15 is used to press at the entire lateral wall 6, if the superposed panels between which the heat-activatable glue is present extend at the entire lateral wall 6).

In some cases, the superposing of the panels is visible inside the outer skeleton 3 (that is to say, at the inner surface 4); in contrast, in other cases, the superposing of the panels is visible on the outside of the outer skeleton 3.

There now follows a description of the apparatus 1 for making a container 25 comprising the outer skeleton 3 and the thermoformable film 2 which adheres to the inner surface 4 of the outer skeleton 3. In particular, the apparatus 1 according to this invention can be applied for an outer skeleton 3 and a thermoformable film 2 of the types described above (and for this reason they will not be described in further detail below).

That apparatus 1 may advantageously be used to carry out the method for making a container 25 according to this invention.

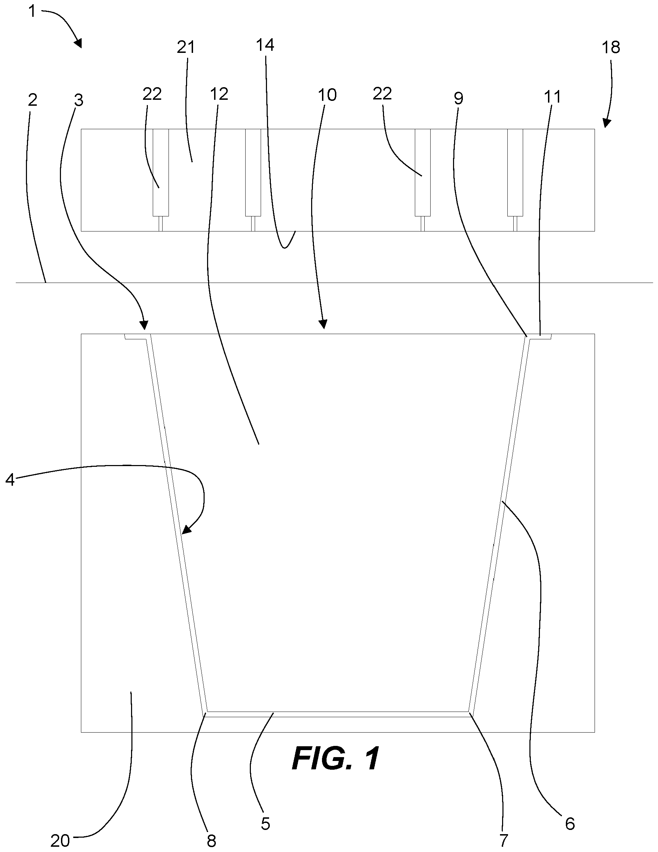

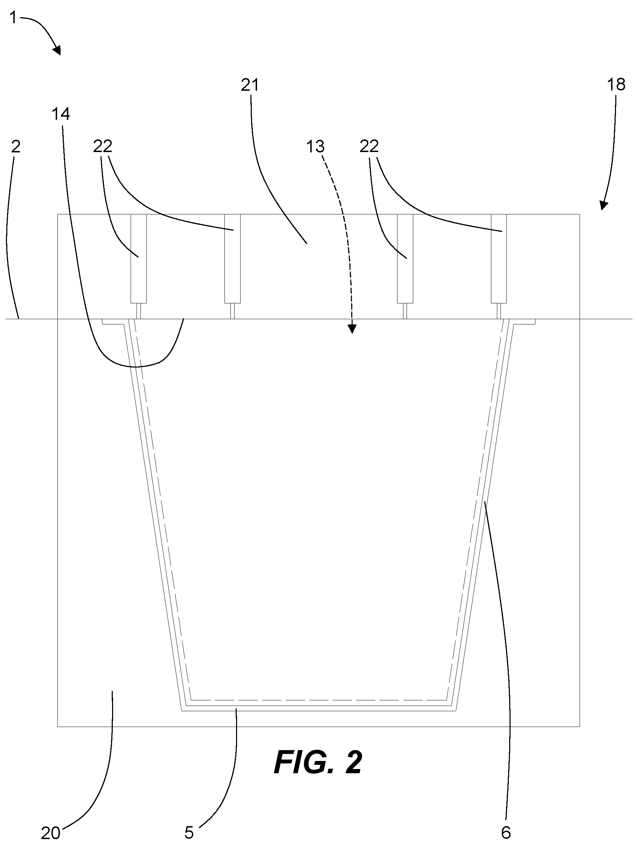

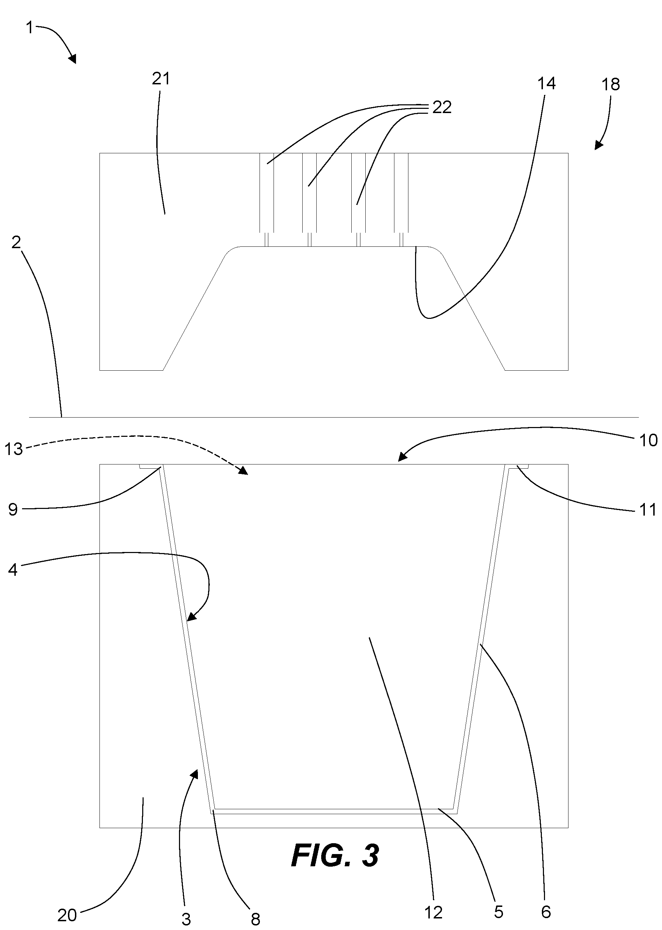

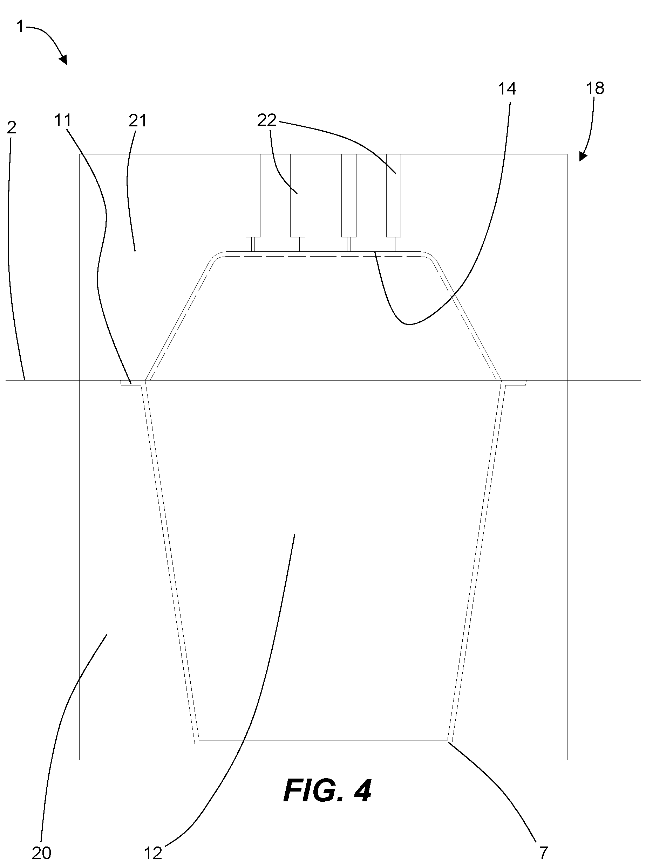

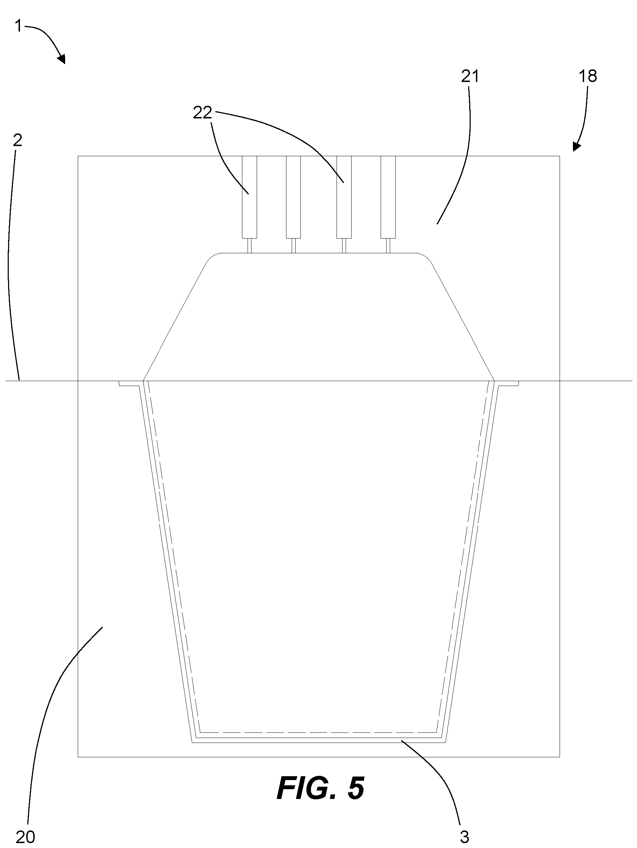

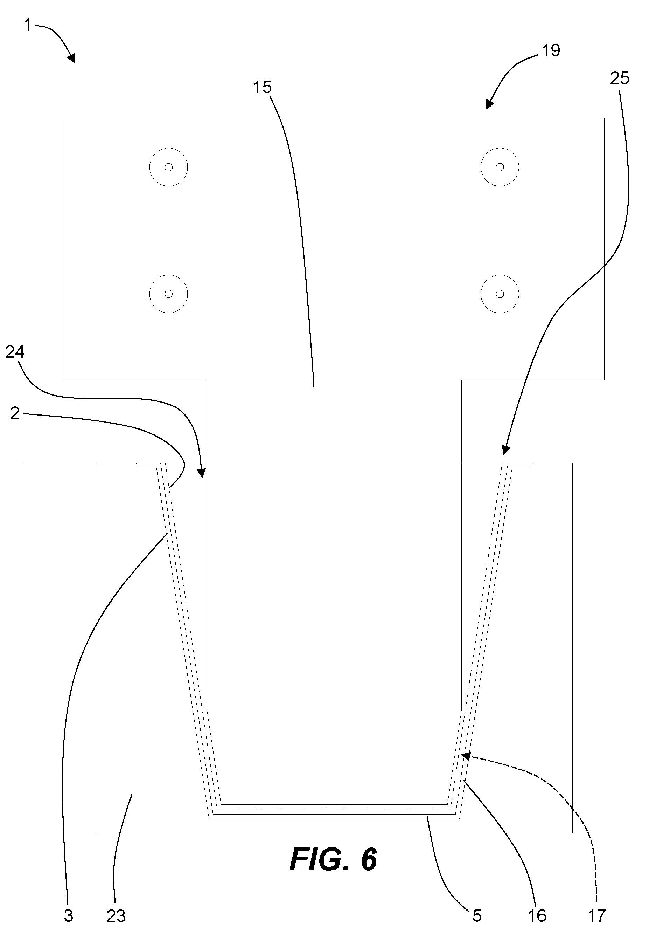

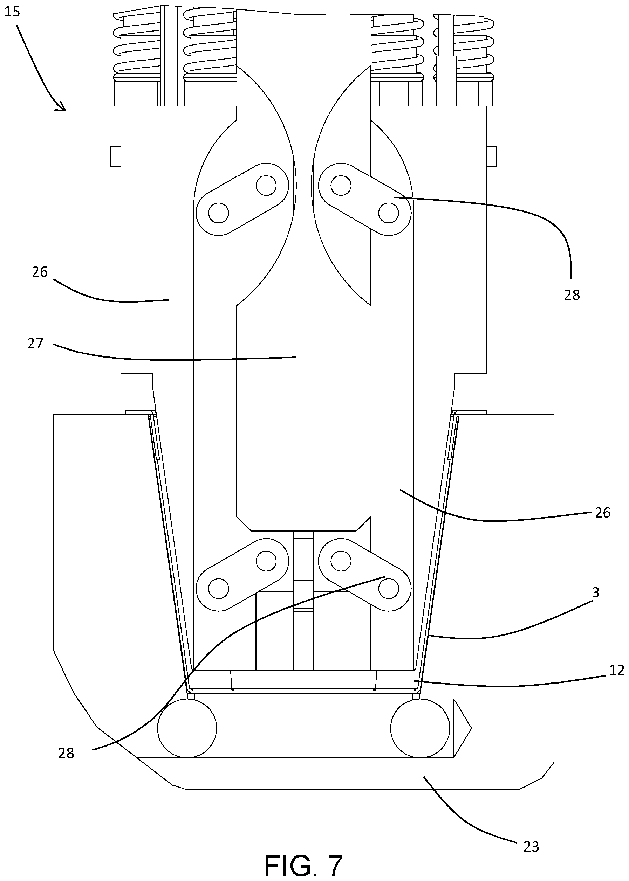

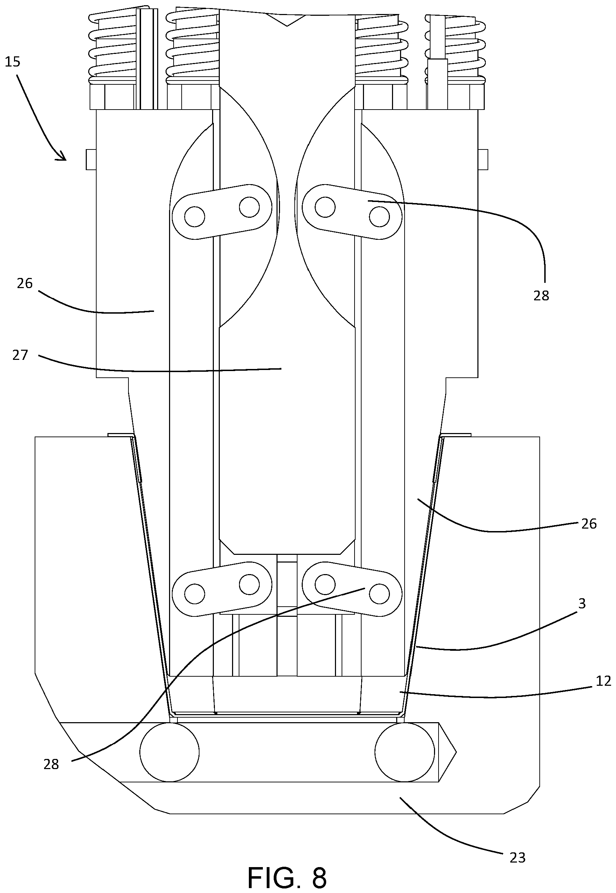

The apparatus 1 comprises both a thermoforming device 18 (a first embodiment of which, with some parts removed, is schematically shown in Figures 1 and 2 and a second embodiment of which, with some parts removed, is schematically shown in Figures 3 to 5) for thermoforming the thermoformable film 2 on the inner surface 4 of the outer skeleton 3, and a pressing device 19 (an embodiment of which, with some parts removed, is schematically shown in Figure 6, and another in Figures 7 and 8).

Similarly to the prior art thermoforming devices, the thermoforming device 18 belonging to the apparatus 1 according to this invention also advantageously comprises a supporting body 20, which defines a seat 13 for housing the outer skeleton 3, and a closing element 21.

At least one of either the supporting body 20 or the closing element 21 is movable relative to the other between an open position and a closed position. When the supporting body 20 and the closing element 21 are in the open position, the supporting body 20 and the closing element 21 are spaced apart from each other and the seat 13 is open. When the supporting body 20 and the closing element 21 are in the closed position, in contrast, the supporting body 20 and the closing element 21 are coupled to each other and the top of the seat 13 is closed.

In the preferred embodiments, the thermoforming device 18 also comprises means for creating the vacuum which are associated with at least one of either the supporting body 20 or the closing element 21 (preferably, with the supporting body 20) and which are configured to create the vacuum inside the seat 13 when the supporting body 20 and the closing element 21 are in the closed position.

Advantageously, the closing element 21 has a closing surface 14 which is a heating surface which, when the supporting body 20 and the closing element 21 are in the closed position, is directed towards the seat 13 and closes the top of the seat 13. The heating surface is preferably configured to heat the thermoformable film 2 before its thermoforming on the inner surface 4 of the outer skeleton 3. In some embodiments, the heating surface is substantially flat (as, for example, in the first embodiment of the thermoforming device 18 - Figures 1 and 2); in other embodiments, in contrast, the heating surface is curved and defines a concavity which, when the supporting body 20 and the closing element 21 are in the closed position, is directed towards the seat 13 (as, for example, in the second embodiment of the thermoforming device 18 - Figures 3, 4 and 5).

Preferably, in the embodiments in which the closing element 21 has the heating surface, the thermoforming device 18 also comprises suction means 22 which are associated with the closing element 21 and which are configured to retain the thermoformable film 2 in a position near, and advantageously in contact with, the heating surface, if necessary after having partly deformed the film towards the heating surface (as, for example, in the second embodiment of the thermoforming device 18 - Figures 3, 4 and 5).

However, embodiments are possible in which the closing element 21 does not have the heating surface. For example, in some embodiments the thermoformable film 2 may be fed to thermoforming device 18 already heated and at the temperature suitable for thermoforming it on the inner surface 4 of the outer skeleton 3. In these embodiments, when the thermoformable film 2 is interposed between the supporting body 20 and the closing element 21, it is already heated.

Regarding pressing device 19, in contrast, it comprises a supporting element 23, which defines a housing 24 for housing the outer skeleton 3 on which the thermoformable film 2 was thermoformed, and a pressing element 15, which is movable relative to the supporting element 23. In particular, the pressing element 15 is movable relative to the supporting element 23 between a non-operating position and an operating position. When the pressing element 15 is in the non-operating position, the pressing element 15 is spaced apart from the supporting element 23. In contrast, when the pressing element 15 is in the operating position, the pressing element 15 is coupled to the supporting element 23 and is inserted in the housing 24 so that it is inserted, in use, in the compartment 12 of the outer skeleton 3 and presses the thermoformable film 2 against the inner surface 4 of the outer skeleton 3 and makes the thermoformable film 2 adhere to the inner surface 4 of the outer skeleton 3 or it increases the adherence of the thermoformable film 2 to the inner surface 4 of the outer skeleton 3.

In some preferred embodiments, at least one of either the supporting element 23 or the pressing element 15 is heated and is configured to adopt, in use, a temperature of between 50°C and 250°C, preferably between 50°C and 200°C. In some embodiments at least one of either the supporting element 23 or the pressing element 15 is configured to adopt, in use, a temperature more preferably between 100°C and 200°C and even more preferably between 100°C and 150°C. In other embodiments, at least one of either the supporting element 23 or the pressing element 15 is configured to adopt, in use, a temperature preferably between 60°C and 100°C.

Advantageously, for that purpose the supporting element 23 and/or the pressing element 15 are internally equipped with suitable heating means, similar to those commonly used in apparatuses 1 of this type. In some cases, the heating means comprise electric heating elements associated with temperature sensors. In other cases, the heating means have a plurality of ducts, obtained inside the supporting element 23 and/or the pressing element 15, in which a hot fluid flows (such as, for example, hot water or hot air) to heat them. In particular, in the embodiments in which the pressing element 15 is heated and the heating means have the ducts in which hot air flows, the pressing element 15 may advantageously have outlet holes which put the ducts in fluid communication with the outside to allow the hot air to come out of the ducts, during execution of the inserting step, in such a way as to heat the thermoformable film during the inserting step.

In the preferred embodiments, the pressing element 15 is at least partly shaped to match the compartment 12 of the outer skeleton 3 (at least when it is in the operating position), in particular at the zones of the compartment 12 at which it must act by pressing (for example bottom wall 5 and, if necessary, lateral wall 6). Advantageously, in some embodiments the pressing element 15 is shaped to match the entire compartment 12 of the outer skeleton 3. That allows the pressing element 15 to be used to press the thermoformable film 2 on the entire inner surface 4 of the outer skeleton 3. In some embodiments, the pressing element 15 comprises movable portions 26 which are switchable between a distancing configuration, in which they are spaced apart from the supporting element 23 so that, in use, they are spaced apart from the inner surface 4 (configuration which they adopt when the pressing element 15 is in the retracted configuration), and a contact configuration, in which they are shifted (advantageously radially) outwards compared with when they are in the distancing configuration and in which, in use, they are in contact with the inner surface 4 of the outer skeleton 3 to press the one or more pairs of superposed panels against the supporting element 23 (configuration which they adopt when the pressing element 15 is in the expanded configuration). In those embodiments the pressing element 15 is advantageously laterally expandable (perpendicularly to the line along which it is inserted in the compartment 12).

An example of an embodiment in which the pressing element 15 comprises movable portions 26 is illustrated in Figures 7 and 8 which show the pressing element 15, respectively, in the retracted configuration and in the expanded configuration. In this embodiment, each movable portion 26 is fixed to a central support 27 of the pressing element 15 by means of a four-bar linkage connection 28 and the movement of the movable portions 26 is obtained by lifting the movable portions 26 while keeping the central support 27 still (passage from Figure 7 to Figure 8).

It should be noticed that Figures 7 and 8 (schematically) show the supporting element 23 and the pressing element 15 in a vertical central section in which only two movable portions 26 are visible. However, advantageously, there may be as many movable portions 26 as there are faces at which there are pairs of superposed panels present; for example, there may be four movable portions 26 and they may be movable in pairs in two vertical planes perpendicular to each other.

Depending on the embodiments, the movable portions 26 of the pressing element 15 or, more generally, their parts intended to make contact with the outer skeleton 3 may be made of any material suitable for the purpose, for example metal material, metal alloys or more or less compressible elastomeric material (mounted on a rigid support).

In other embodiments not illustrated, in contrast, the pressing element 15 comprises, respectively, an inflatable body or an expandable body and the apparatus also comprises a feeding device connected, respectively, to the inflatable body or to the expandable body for feeding to, and removing from, the inflatable body or the expandable body a working fluid (for example water, oil, air, or an inert gas) for, respectively, inflating it and deflating it or expanding it and retracting it. The pressing element 15 is in the extended configuration when the inflatable body is inflated or the expandable body is expanded (therefore filled with working fluid) and in the retracted configuration when the inflatable body is deflated or the expandable body is retracted (therefore emptied of working fluid).

In some embodiments, the thermoforming device 18 and the pressing device 19 are separate from each other.

Advantageously, in those embodiments the apparatus 1 has at least two working stations: a thermoforming station, at which the thermoforming device 18 is positioned, and an inserting station, at which the pressing device 19 is positioned. In more detail, the thermoforming station and the inserting station are positioned in such a way that the thermoforming station is positioned upstream of the inserting station along a movement path of the containers being formed.

During operation of the apparatus 1, at the thermoforming station the outer skeleton 3 is inserted in the seat 13 and the thermoformable film 2 is positioned above it, with the supporting body 20 and the closing element 21 in the open position. Then the seat 13 is closed by means of the movement of one of either the supporting body 20 or the closing element 21 from the open position to the closed position and the thermoformable film 2 is thermoformed on the inner surface 4 of the outer skeleton 3. Afterwards, the container 25 is removed from the seat 13 and is shifted from the thermoforming station to the inserting station, at which it is inserted in the housing 24, while the pressing element 15 is in the non-operating position. Then the pressing element 15 is moved from the non-operating position to the operating position pressing the thermoformable film 2 against the inner surface 4 of the outer skeleton 3. Finally, after having returned the pressing element 15 to the non-operating position, the container 25 obtained is removed from the housing 24.

In other embodiments, in contrast, the supporting body 20 (of the thermoforming device 18) is constituted of the supporting element 23 (of the pressing device 19) and the seat 13 corresponds to the housing 24 (Figures 7 and 8). In this case, the supporting element 23 can be associated, at successive moments, either with the closing element 21, to define jointly with it the thermoforming device 18, or with the pressing element 15, to define jointly with it the pressing device 19.

In some cases, the supporting element 23 is movable, relative to the closing element 21 and relative to the pressing element 15, between a first working position, in which it is associated with the closing element 21, and a second working position, in which it is associated with the pressing element 15. For example, the apparatus 1 comprises a guide on which the supporting element 23 is mounted, and which defines a movement path between a thermoforming station and an inserting station, which is placed downstream of the thermoforming station along the movement path. When the supporting element 23 is in the thermoforming station, the supporting element 23 is associated with the closing element 21. In contrast, when the supporting element 23 is in the inserting station, the supporting element 23 is associated with the pressing element 15.

Advantageously, in these embodiments along the movement path there may be further working stations present, placed upstream of the thermoforming station (such as, for example, a positioning station at which a device is present, which belongs to the apparatus 1, for positioning the outer skeleton 3 inside the housing 24) and/or downstream of the inserting station (such as, for example, a filling station at which a device is present, which belongs to the apparatus 1, for inserting in the container 25 a product to be packaged). In other embodiments in which the supporting element 23 is shared by the thermoforming device 18 and the pressing device 19, in contrast, the closing element 21 and the pressing element 15 are movable, relative to the supporting element 23, between a first working configuration, in which the closing element 21 is associated with the supporting element 23, and a second working configuration, in which in contrast the pressing element 15 is associated with the supporting element 23.

In yet other embodiments, in contrast, the pressing element 15 is part of the closing element 21. In particular, in the embodiments in which the closing element 21 has the heating surface, advantageously the pressing element 15 may define part of that heating surface. In some embodiments of this type, moreover, the pressing element 15 may comprise several movable parts and be switchable between a home configuration in which it constitutes part of the closing element 21, and an operating configuration in which it is at least partly shaped to match the compartment 12 of the outer skeleton 3.

This invention brings important advantages.

Thanks to this invention it was possible to define a method and to make an apparatus which allow a container to be made which comprises an outer skeleton and a thermoformable film which adheres at least to an inner surface of the outer skeleton and which has optimum quality irrespective of the materials used and of its shape and size.

In particular, the method and the apparatus defined allow the thermoformable film to be made to adhere in the optimum way to the entire inner surface of the outer skeleton.

Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A method for making a container comprising an outer skeleton (3) and a thermoformable film (2) which adheres at least to an inner surface (4) of the outer skeleton (3);
the method comprising the following steps:
a heating step, during which the thermoformable film (2) is heated;
a thermoforming step, during which the heated thermoformable film (2) is thermoformed on the inner surface (4) of the outer skeleton (3); and
an inserting step, carried out after the thermoforming step, during which a pressing element (15) is inserted inside the compartment (12) and the thermoformable film (2) is pressed, with the pressing element (15), against the inner surface (4) of the outer skeleton (3) to make the thermoformable film (2) adhere to the inner surface (4) of the outer skeleton (3) or to increase the adherence of the thermoformable film (2) to the inner surface (4) of the outer skeleton (3).

2. The method according to claim 1, wherein an outer skeleton (3) is used which comprises a bottom wall (5), which has a perimetric edge (7), and a lateral wall (6), which extends between a lower edge (8), connected to the perimetric edge (7), and an upper edge (9) which defines an upper opening (10), the bottom wall (5) and the lateral wall (6) together defining a compartment (12) and the inner surface (4), wherein during the inserting step the thermoformable film (2) is pressed, with the pressing element (15), against the bottom wall (5) and/or against at least one portion of the lateral wall (6).

3. The method according to claim 1, wherein an outer skeleton (3) is used which comprises a concave or hemispherical wall which defines a compartment (12) and the inner surface (4) and which has an upper edge (9) which defines an upper opening (10).

4. The method according to claim 2 or 3, wherein, during the inserting step, a pressing element (15) is used which is substantially shaped to match at least one lower zone (17) of the compartment (12) and/or one upper zone of the compartment (12).

5. The method according to any one of claims 1 to 4, wherein during the inserting step the outer skeleton (3) is kept inside a seat (13) defined by a supporting body (20) and with the pressing element (15) the thermoformable film (2) and the outer skeleton (3) are pressed against the supporting body (20).

6. The method according to claim 5, wherein a heated supporting element (23) is used and wherein during the inserting step the supporting element (23) is kept at a temperature of between 50°C and 250°C, preferably between 50°C and 200°C.

7. The method according to any one of claims 1 to 6, wherein a heated pressing element (15) is used and wherein during the inserting step the pressing element (15) is kept at a temperature of between 50°C and 250°C, preferably between 50°C and 200°C.

8. The method according to claim 6 or 7, wherein the outer skeleton (3) has at least one pair of superposed panels between which a heat-activatable glue is present, wherein during the inserting step the thermoformable film (2) is pressed, with the pressing element (15), against the pair of superposed panels and activation of the heat-activatable glue is caused, and wherein activation of the heat-activatable glue causes an adhesive coupling between the pair of panels.

9. The method according to any one of claims 1 to 8, wherein at the end of the thermoforming step the thermoformable film (2) is in contact with the entire inner surface (4) of the outer skeleton (3) or is in contact only with a part of the inner surface (4).

10. The method according to any one of claims 1 to 9, wherein the thermoforming step is carried out by thermoforming the thermoformable film (2) on the inner surface (4) of the outer skeleton (3) placed inside a seat (13) which is closed, and wherein the inserting step is carried out inside the seat (13), after having opened the seat (13) and while keeping that seat (13) open.

11. The method according to any one of claims 1 to 9, wherein the thermoforming step is carried out by thermoforming the thermoformable film (2) on the inner surface (4) of the outer skeleton (3) placed inside a seat (13) which is closed, and wherein the inserting step is carried out inside the seat (13) and while keeping the seat (13) closed.

12. The method according to any one of claims 1 to 11, wherein the inserting step comprises an expansion step in which the pressing element (15) expands inside the compartment (12), radially relative to a central axis of the compartment (12), to press, with the pressing element (15), the thermoformable film (2) against the inner surface (4).

13. The method according to any one of claims 1 to 12, wherein the outer skeleton (3) has a maximum height of the compartment (12) which is greater than or equal to 60 mm or a ratio between the maximum width of the upper opening (10) and the maximum height of the compartment (12) which is less than or equal to 2:1, preferably less than or equal to 1.5:1, and even more preferably less than or equal to 1:1.

14. An apparatus for making a container comprising an outer skeleton (3) and a thermoformable film (2) which adheres at least to an inner surface (4) of the outer skeleton (3);
the apparatus (1) comprising:
a thermoforming device (18), for thermoforming the thermoformable film (2) on the inner surface (4) of the outer skeleton (3); and
a pressing device (19) which comprises a supporting element (23) which defines a housing (24) for housing, in use, the outer skeleton (3) on which the thermoformable film (2) was thermoformed, and a pressing element (15), which is movable relative to the supporting element (23) between a non-operating position, in which the pressing element (15) is spaced apart from the supporting element (23), and an operating position, in which the pressing element (15) is coupled to the supporting element (23) and is inserted in the housing (24) so that it is inserted, in use, in the compartment (12) of the outer skeleton (3) and presses the thermoformable film (2) against the inner surface (4) of the outer skeleton (3) and it makes the thermoformable film (2) adhere to the inner surface (4) of the outer skeleton (3) or it increases the adherence of the thermoformable film (2) to the inner surface (4) of the outer skeleton (3).

15. The apparatus according to claim 14, wherein the thermoforming device (18) and the pressing device (19) are separate from each other.

16. The apparatus according to claim 15, wherein the thermoforming device (18) comprises a supporting body (20), which defines a seat (13) for housing, in use, the outer skeleton (3), and a closing element (21), at least one of either the supporting body (20) or the closing element (21) being movable relative to the other between an open position, in which the supporting body (20) and the closing element (21) are spaced apart from each other and the seat (13) is open, and a closed position, in which the supporting body (20) and the closing element (21) are coupled to each other and the top of the seat (13) is closed.

17. The apparatus according to claim 14, wherein the thermoforming device (18) comprises the supporting element (23) and a closing element (21), at least one of either the supporting element (23) or the closing element (21) being movable relative to the other between an open position, in which the supporting element (23) and the closing element (21) are spaced apart from each other and the housing (24) is open, and a closed position, in which the supporting element (23) and the closing element (21) are coupled to each other and the top of the housing (24) is closed by the closing element (21).

18. The apparatus according to claim 17, wherein the supporting element (23) is movable, relative to the closing element (21) and relative to the pressing element (15), between a first working position, in which it is associated with the closing element (21), and a second working position, in which it is associated with the pressing element (15).

19. The apparatus according to claim 17, wherein the closing element (21) and the pressing element (15) are movable, relative to the supporting element (23), between a first working configuration, in which the closing element (21) is associated with the supporting element (23), and a second working configuration, in which the pressing element (15) is associated with the supporting element (23).

20. The apparatus according to claim 17, wherein the pressing element (15) is part of the closing element (21).

21. The apparatus according to claim 20, wherein the pressing element (15) is switchable between a home configuration, in which it constitutes part of the closing element (21), and an operating configuration, in which it is at least partly shaped to match the compartment (12) of the outer skeleton (3).

22. The apparatus according to any one of claims 14 to 21, wherein the pressing element (15) is at least partly shaped to match the compartment (12) of the outer skeleton (3), at least when it is in the operating position.

23. The apparatus according to any one of claims 14 to 22, wherein at least one of either the supporting element (14) or the pressing element (15) is heated and is configured to adopt, in use, a temperature of between 50°C and 250°C, preferably between 50°C and 200°C.

24. The apparatus according to any one of claims 14 to 23, wherein the pressing element (15), when it is in the operating position, is switchable between a retracted configuration in which it is spaced apart from the supporting element (23) and an expanded configuration in which, in use, it is configured to press the thermoformable film (2) against the inner surface (4).

25. The apparatus according to claim 24, wherein the pressing element (15) comprises a plurality of movable portions (26) which are switchable between a distancing configuration, which they adopt when the pressing element (15) is in the retracted configuration and in which they are spaced apart from the supporting element (23), and a contact configuration which they adopt when the pressing element (15) is in the expanded configuration and in which they are shifted outwards compared with when they are in the distancing configuration, for pressing, in use, the thermoformable film (2) against the inner surface (4).

26. The apparatus according to claim 25, wherein the pressing element (15) comprises, respectively, an inflatable body or an expandable body and wherein the apparatus also comprises a feeding device connected, respectively, to the inflatable body or to the expandable body for feeding to, and removing from, respectively, the inflatable body or the expandable body a working fluid for, respectively, inflating it and deflating it or expanding it and retracting it, and thereby causing the switching of the pressing element (15) between the retracted configuration and the expanded configuration.
